# EUROPÄISCHE PATENTSCHRIFT

(11) **EP 0 972 439 B1**
(45) Veröffentlichungstag und Bekanntmachung des Hinweises auf die Patenterteilung: **26.03.2003**
(21) Anmeldenummer: 99113383.6
(22) Anmeldetag: 10.07.1999
(51) Int. Cl.: A01F 15/08, A01D 75/18, A01F 29/16, A01F 15/10

(54) **Ballenpresse für Landwirtschaftliche Erntegüter**
Baler for agricultural produce
Presse à balles pour matériaux agricoles

(30) Priorität: 14.07.1998 DE 19831506
(43) Veröffentlichungstag der Anmeldung: 19.01.2000
(73) Patentinhaber: Lely Maschinenfabrik GmbH, 38304 Wolfenbüttel (DE)
(72) Erfinder: Wilkens, Dieter Dr.-Ing., 38302 Wolfenbüttel-Ahlum (DE); Röhrbein, Jürgen, 38159 Wahle (DE)

(56) Entgegenhaltungen:
- EP-A- 0 876 752
- DE-A- 4 216 483
- DE-A- 19 748 748
- DE-C- 3 809 132
- DE-U- 29 504 531

## Beschreibung

Die Erfindung betrifft eine Ballenpresse für landwirtschaftliche Erntegüter zur Erzeugung rechteckiger Ballen mit einem kontinuierlich angetriebenen Rechenförderer, der das Erntegut synchron zu der periodischen Hin- und Herbewegung eines Preßkolbens durch eine Preßkanaleinlaßöffnung fördert, die der Preßkolben periodisch öffnet oder verschließt, wobei der Rechenförderer eine Überlastaussetzkupplung aufweist, welche den Rechenförderer bei Überlastung für die Zeit einer Förderperiode von seinem Antrieb trennt und nach Ablauf dieser Periode die Antriebsverbindung zum Rechenförderer selbsttätig wieder herstellt.

Eine wichtige Voraussetzung für das Pressen gleichmäßig hochverdichteter, quaderförmiger Ballen ist die gute Befüllung des Preßkanales. Diese muß sowohl bei dünnen, wenig Erntegut enthaltenden Schwaden als auch bei dicken, viel Erntegut enthaltenden Schwaden sowie unterschiedlichen Fahrgeschwindigkeiten gewährleistet sein, um die gewünschte Ballendichte und Ballenform zu erreichen. Zur Lösung dieses Problems sind zahlreiche Ausführungen bekannt.

Aus der DE 2748594 A 1 ist ein Verfahren und eine Vorrichtung zum Laden von Erntegut bekannt mit einem kontinuierlich angetriebenen Rotationsförderer und einem über eine Eintourenkupplung zuschaltbaren, synchron zum Preßkolben antreibbaren Stopfer zum Einschieben einer Packung in den Preßkanal. Angestrebt wird hier, daß bei einer Ballenformung immer möglichst gleichgroße Erntegutpakete in einen Preßkanal mit kontinuierlich hin und her angetriebenem Preßkolben geschoben werden. Dazu wird ein unterhalb des Preßkanals liegender und von einem Rotationsförderer beschickter Zuführkanal als Stauraum genutzt und der Stopfer über eine Klauenkupplung nur dann zugeschaltet, wenn ein Dichtefühler im Zuführkanal signalisiert, daß eine Erntegutpackung mit der gewünschten Größe bzw. Dichte im Zuführkanal angesammelt wurde und der Preßkolben die Preßkanaleinlaßöffnung freigibt. Arbeitet die Vorrichtung bei voller Kapazität bei großvolumigen Schwaden aus Erntegut und / oder bei schneller Fahrt, so ist am Beginn jedes Kolbenzyklus eine volle Ladung aus Erntegut fertig und der Stopfer arbeitet ununterbrochen. Bei kleinen Schwaden und feuchtem Erntegut können drei bis fünf Preßkolbenhübe (Leerhübe) auf einen Stopfhub kommen. Nachteilig ist, daß als Überlastsicherung für den Stopfer gegen Überladungen im Zuführkanal lediglich eine Scherschraube vorgesehen ist, die die bekannten Nachteile zur Folge hat.

Bei der Ballenpresse gemäß der DE-4216483 A 1 sind die Baugruppen Rotationsförderer und Stopfer in einer Baueinheit zu einem Rechenförderer integriert, der mit einer Überlastaussetzkupplung versehen ist. Durch die Überlastaussetzkupplung wird realisiert, daß der Rechenförderer bei einer vorwählbaren Belastung, die eine Überlastung darstellt und dem Ansprechmoment der Kupplung entspricht, für die Zeit genau einer Preßkolbenhubperiode von seinem Antrieb getrennt wird. Ein gravierender Nachteil dieser Ballenpresse ist aber, daß bei dünnen, wenig Erntegut enthaltenden Schwaden nicht genügend Material im Zuführkanal angesammelt werden kann und somit die Befüllung im oberen Preßkanalbereich schlecht ist, wodurch "bananenförmige" Ballen entstehen.

Deshalb wird in der DE 19627397 vorgeschlagen, den Rechenförderer gemäß DE 4216483 A 1 bei dünnen Schwaden nur mit einer Antriebsdrehzahl anzutreiben, welche exakt der halben Antriebsdrehzahl des Kurbelantriebs des Preßkolbens entspricht, d. h. pro Fördervorgang des Rechenförderers erfolgen zwei Preßhübe des Preßkolbens, davon ein Leerhub. Dazu ist im Antriebsstrang des Rechenförderers ein Schaltgetriebe vorgesehen. Wenn wenig Material im Schwad liegt, schafft aber auch diese Vorrichtung keine Abhilfe.

Der Erfindung liegt die Aufgabe zugrunde, ausgehend von einer aus der DE-4216483 A 1 bekannten Ballenpresse, die Befüllung eines Preßkanales insbesondere bei dünnen Schwaden ohne wesentliche bauliche Veränderungen der Förder- bzw. Stopfeinrichtungen zur Befüllung des Preßkanales zu verbessern, wobei die Erfindung sowohl bei Stopfeinrichtungen mit gesteuerten als auch mit ungesteuerten Rechen Anwendung finden kann und darüber hinaus mit einfachen Mitteln ansteuerbar sein soll.

Ausgehend von der aus der DE-4216483 A 1 bekannten Ballenpresse wird die Aufgabe gemäß der Erfindung dadurch gelöst, daß eine Schaltvorrichtung zum periodischen Abschalten des Rechenförderers und Mittel vorgesehen sind zum Anhalten des Rechenförderers für eine oder mehrere Förderperioden in einer förderunwirksamen Stellung außerhalb des Zuführkanales, und daß der Einschaltvorgang nur synchron zur Bewegung des Preßkolbens erfolgt. Dadurch wird unter Beibehaltung der Überlastaussetzkupplungsfunktion eine ganz einfache, drehmomentunabhängige Schaltfunktion geschaffen, um den Rechenförderer bei Bedarf zwecks Ansammlung von Erntegutportionen bestimmter Größe und Dichte im Zuführkanal abzuschalten. Die Abschaltdauer ist entweder voreinstellbar oder z. B. in Abhängigkeit von der Füllhöhe im Zuführkanal so steuerbar, daß im Zuführkanal selbst bei dünnsten Schwaden im dritten Schnitt eine Vorpressung des Materials und hinreichende Befüllung des Zuführkanales mit Material gewährleistet ist, bevor der Einschaltvorgang des Rechenförderers synchron zum Preßkolben erfolgt. Der Einschaltvorgang kann auch von einem zweiten Parameter abhängig sein, z. B. einem Belastungssensor am Rechenförderer, der bewirkt, daß es nach einer Abschaltung beim Wiedereinschalten nicht zu einer Überlastung kommt. Sowohl bei ungesteuerten als auch bei gesteuerten Rechenförderern kann die Schaltvorrichtung auf einfachste Weise auf der Rechenfördererantriebswelle montiert werden ohne jegliche bauliche Veränderungen des Umfeldes. Bei genügender Schwadmasse spricht die Schaltvorrichtung überhaupt nicht an und hat nur die bekannte Überlastfunktion.

In einer bevorzugten Ausführungsform ist eine Eintouren- Kugel-, -Nocken-, -Keilschalt- oder sonstige-Überlastkupplung als Schaltvorrichtung ausgebildet, mit der der Rechenförderer für die Zeit einer oder mehrerer Preßkolbenhubperioden von seinem Antrieb trennbar ist. Derartige Kupplungen sind teilweise auf dem Markt erhältlich und nur noch mit Mitteln zum Aus- und Einrücken der Sperrelemente zu versehen.

Eine besonders einfache Ansteuerung der Schaltvorrichtung wird dann erzielt, wenn diese ein ständig mit einem treibenden Antriebsteil umlaufendes Schaltelement aufweist, welches durch ein in dessen Umlaufbahn einschwenkbares Auslöseelement das Sperrelement der Schaltvorrichtung ausrückt. Das Auslöseelement kann dabei ortsfest aber bewegbar angeordnet sein.

Nach einem weiteren Merkmal der Erfindung ist zum Anhalten des Rechenförderers in der förderunwirksamen Stellung dem Antriebsstrang des Rechenförderers nach der Schaltvorrichtung bzw. der Überlastaussetzkupplung oder direkt dem Rechenförderer eine Schnellstop-Einrichtung zugeordnet, z. B. hydraulische oder elektromechanische Bremse.

Vorteilhafterweise ist die Betätigung der Schnellstop-Einrichtung mit der Betätigung der Schaltvorrichtung gekoppelt, so daß Abschalt- und Anhaltfunktion bzw. Einschaltfunktion sowie Lösen der Bremse zeitgleich oder auch phasenverschoben steuerbar sind. Zum Einschalten kann es z. B. vorteilhaft sein, die Bremse kurz vorher zu lösen, wodurch der Rechenförderer sich schon in Förderrichtung in Bewegung setzen kann und Anfahrstöße verringert bzw. geringere Dämpfungsglieder notwendig sind.

Eine insgesamt bezüglich Durchsatzleistung, Preßdichte und Ballenform optimierte Lösung wird dann erzielt, wenn die vorliegende Erfindung auf eine Ballenpresse angewendet wird, bei welcher als Rechenförderer nebeneinander auf einer gemeinsamen Drehachse befestigte rotierende Segmentkörper als Mitnehmer vorgesehen sind, die den Preßkolben durchfahren. Diese Ballenpresse kombiniert die Vorteile hinsichtlich Durchsatzleistung der Ballenpresse mit dem Preßkolben durchfahrenden Rechenförderer, der das Preßgut vor die Preßkolbenstirnseite wirft, mit den Vorteilen hinsichtlich Befüllung einer Ballenpresse mit Vorpreßkammer bzw. Stauraum, so daß die erfindungsgemäße Ballenpresse sowohl große Schwaden mit höchster Durchsatzleistung verarbeitet und auch bei dünnen Schwaden gute Preßkanalbefüllungen und damit gute Ballenformen und -dichten erreicht werden.

Weitere zweckmäßige Ausgestaltungen ergeben sich aus den Unteransprüchen.

Nachstehend werden zwei Ausführungsbeispiele des Erfindungsgegenstandes in der Zeichnung dargestellt und im folgenden näher beschrieben. Hierbei zeigt:
Fig. 1 einen Längsschnitt einer Ballenpresse in schematischer Darstellung bekannter Bauart;
Fig. 2 eine Ansicht nach Figur 1 mit einer erfindungsgemäßen Schaltvorrichtung;
Fig. 3 eine erste Ausführungsform einer erfindungsgemäßen Schaltvorrichtung in schematischer Darstellung in Seitenansicht und
Fig. 4 eine zweite Ausführungsform einer erfindungsgemäßen Schaltvorrichtung in schematischer Darstellung im Schnitt.

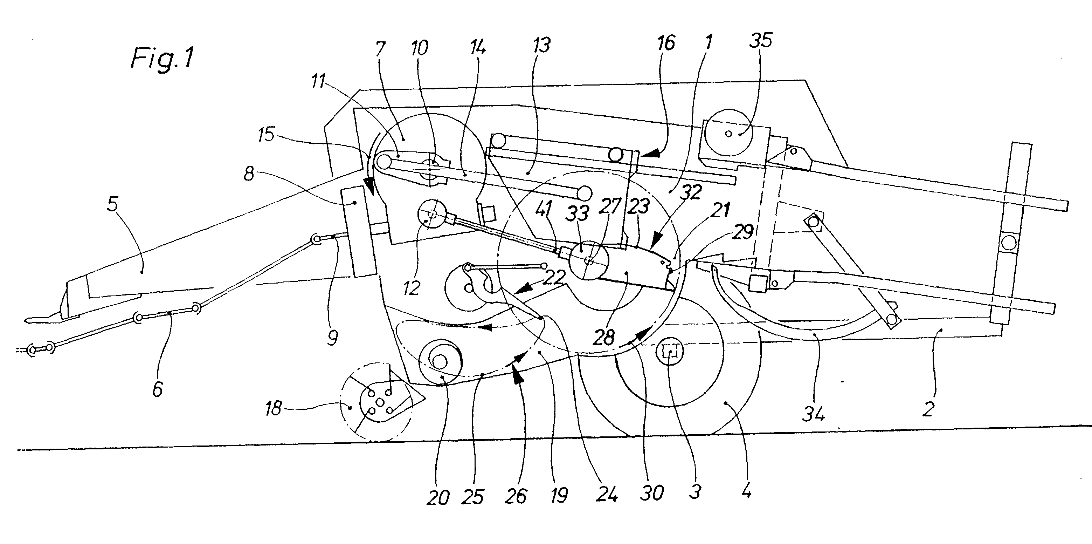

Die in Figur 1 dargestellte Ballenpresse bekannter Bauart weist einen Preßkanal 1 mit rechteckigem Querschnitt auf. Er ruht auf einem Gestell 2, das eine Laufradachse 3 mit Laufrädern 4 aufweist. Die Ballenpresse ist über eine Zugdeichsel 5 mit einem nicht dargestellten Schlepper verbindbar und wird von der Schlepperzapfwelle über eine Gelenkwelle 6 angetrieben.

Im vorderen Teil des Preßkanales 1 ist ein Hauptgetriebe 7 mit einer Schwungmasse 8 angeordnet. Es besitzt eine nach vorn gerichtete Antriebswelle 9 zum Anschluß an die Gelenkwelle 6 und eine Querwelle 10, welche beidseits aus dem Getriebegehäuse herausgeführt ist und beidseits eine Antriebskurbel 11 trägt sowie ein Verteilergetriebe 12 für die Arbeitsorgane der Ballenpresse.

Im mittleren Teil des Preßkanales 1 ist ein Preßkolben 13 gelagert, der über zwei parallele Pleuelstangen 14 mit den Antriebskurbeln 11 verbunden ist. Wenn die Querwelle 10 in Drehrichtung 15 angetrieben wird, fährt der Preßkolben 13 zwischen seiner vorderen, mit Vollinien gezeichneten Endstellung 16 und seiner hinteren, strichpunktiert gezeichneten Endstellung 17 hin und her.

Die Ballenpresse hat einen Aufsammler 18, durch den in Schwaden liegendes Erntegut wie Heu, Stroh oder angewelktes Grüngut von der Feld- bzw. Wiesenfläche anhebbar und einem Zuführkanal 19 zuführbar ist. Im Ausführungsbeispiel ist ein breiter Aufsammler gezeigt. Oberhalb und nach hinten versetzt sind zwei Querförderschnecken 20 angeordnet, durch die die Breite des aufgenommenen Schwades etwa auf die Breite des Preßkanales 1 verringert wird. Der Zuführkanal 19 verläuft vom Aufsammler 18 zunächst waagerecht und mündet dann gekrümmt ansteigend in eine Preßkanaleinlaßöffnung 21.

Das Erntegut wird durch die Wirkung eines ersten 22 und eines zweiten Rechenförderers 23 durch den Zuführkanal 19 und durch die Preßkanaleinlaßöffnung 21 von unten in den Preßkanal 1 gefördert. Beide Rechenförderer 22, 23 werden über das Verteilergetriebe 12 vom Hauptgetriebe 7 angetrieben. Der erste Rechenförderer 22 weist Rechen mit gesteuerten Zinken 24 auf, deren Spitzen sich während des Betriebes auf einer Umlaufbahn 25 in durch Pfeile 26 gekennzeichnete Richtungen bewegen. Anstelle des ersten Rechenförderers 22 kann auch ein Schneidwerkrotor angeordnet sein. Der zweite Rechenförderer 23 besteht aus nebeneinander im Abstand auf einer gemeinsamen Drehachse 27 befestigten, rotierenden Segmentkörpern 28 als Erntegutmitnehmer bzw. Vorpreßelement. Die Segmentkörper 28 weisen an ihrer Förderkante drei Zähne 29 auf, die sägezahnförmig nach rückwärts verlaufen. Im Betrieb rotieren die Segmentkörper 29 synchron zum Preßkolben 13 in Pfeilrichtung 30, wobei die Segmentkörper 28 in der hinteren Endstellung 17 des Preßkolbens 13 eine in Strichpunktlinie gezeichnete Position 31 und in der vorderen Endstellung 16 des Preßkolbens 13 eine in Vollinie dargestellte Position einnehmen und während des Umlaufens Schlitze des Preßkolbens 13 durchfahren. An den Kolbenstirnflächen wird das Material von den Segmentkörpern 28 abgestreift. Im Antrieb des zweiten Rechenförderers 23 ist eine Überlastaussetzkupplung 33 integriert, die den Rechenförderer 23 für eine Preßkolbenhubperiode vorübergehend außer Betrieb setzt und nach maximal 360° seiner Drehung wieder selbsttätig einschaltet. Bekannt ist lediglich die in der DE 4216483 dargestellte und beschriebene Überlastaussetzkupplung. Im Betrieb wird das schwadförmig aufgenommene Preßgut vom Aufsammler 18 und dem ersten Rechenförderer 22 in den Zuführkanal 19 geschoben, wo es von dem zweiten Rechenförderer 23 erfaßt und durch die Preßkanaleinlaßöffnung 21 in den Preßkanal 1 und vor den Preßkolben 13 geschoben wird. Bei Erreichen einer vorgewählten Länge der Ballen werden diese mit Bindematerial eingebunden. Dazu sind nur andeutungsweise dargestellte Bindenadeln 34 und Knoter 35 vorhanden.

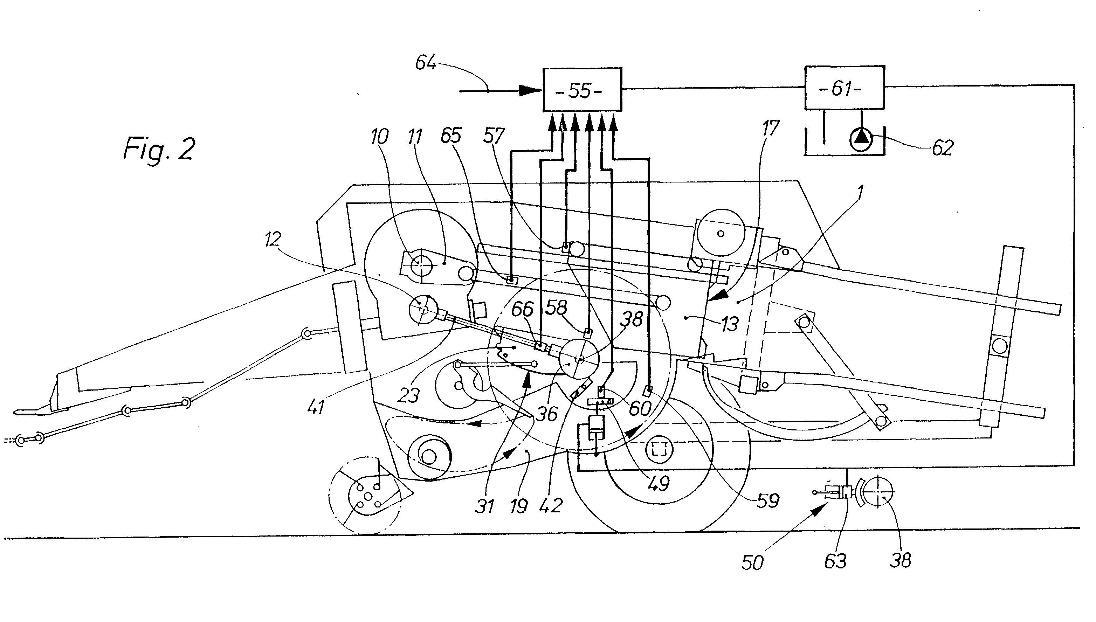

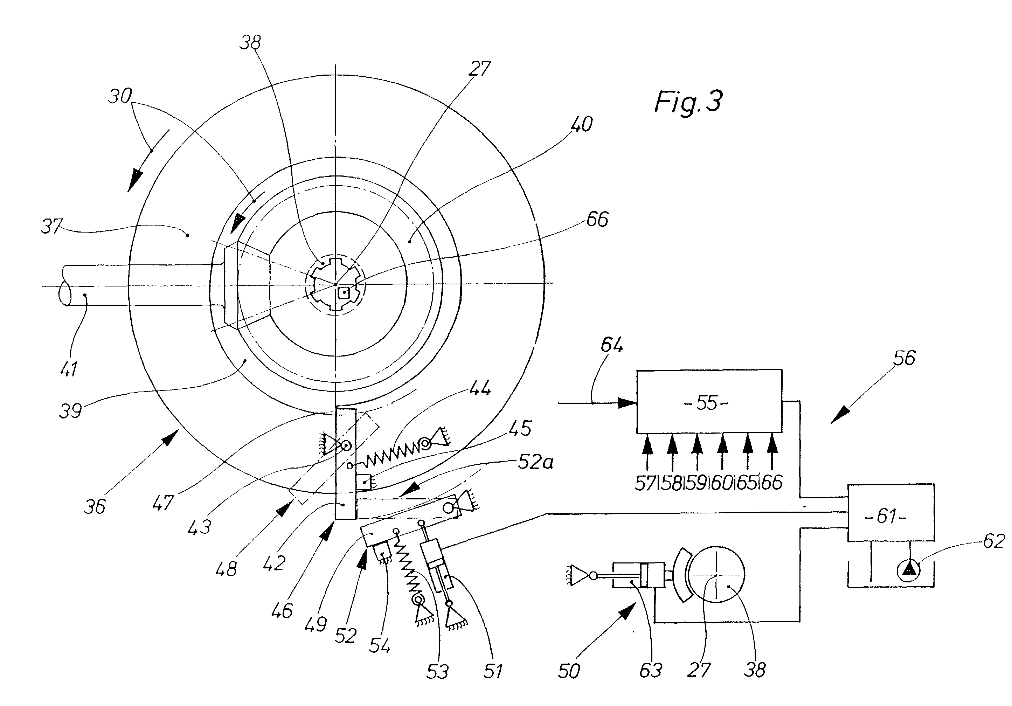

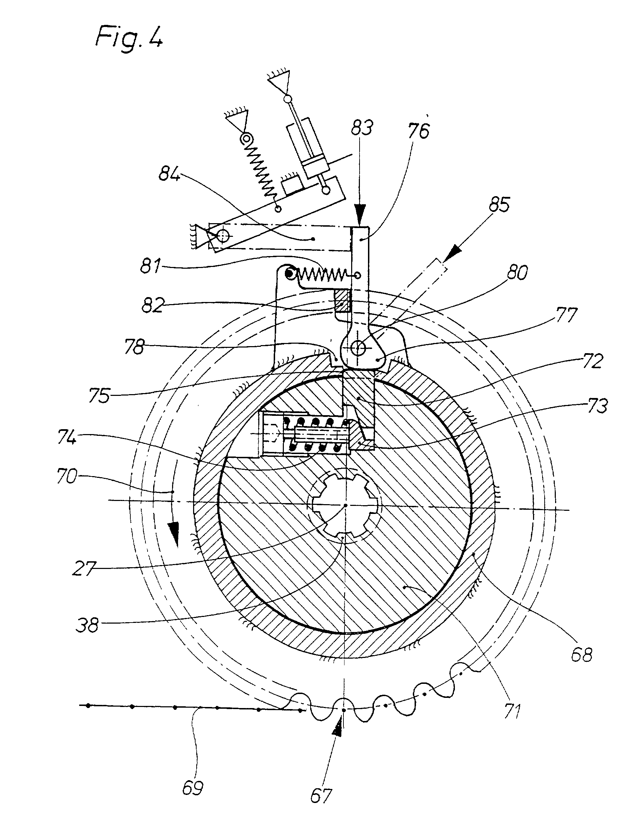

Die in Figur 2 dargestellte Ballenpresse weist eine in Figur 3 im ersten Ausführungsbeispiel und in Figur 4 im zweiten Ausführungsbeispiel näher veranschaulichte Überlastaussetzkupplung für den zweiten Rechenförderer 23 auf, die erfindungsgemäß als Schaltvorrichtung 36 ausgestaltet ist. Es kann aber auch eine Schaltvorrichtung separat von der Überlastaussetzkupplung vorgesehen sein, die die gleichen, nachfolgend beschriebenen Wirkungen hat.

Das in Figur 3 dargestellte Ausführungsbeispiel einer kombinierten Überlastaussetzkupplung mit Schaltvorrichtung 36 umfaßt ein scheibenförmiges Abtriebsteil 37, das z. B. mittels Kerbverzahnung drehfest mit der Antriebswelle 38 des zweiten Rechenförderers 23 verbunden ist und ein drehbar auf der Antriebswelle 38 des Rechenförderers 23 gelagertes Antriebsteil 39, das mit einem Kegelrad 40 fest verbunden ist, welches mit einer vom Verteilergetriebe 12 angetriebenen, ständig umlaufenden Kegelritzelwelle 41 zusammenwirkt. An- 39 und Abtriebsteil 37 sind durch einen als Sperrelement ausgebildeten Schwenkhebel 42 kraftschlüssig miteinander verbindbar und laufen während des Betriebes gemeinsam in Pfeilrichtung 30 um. Der Schwenkhebel 42 ist um die Achse 43 schwenkbar auf dem Abtriebsteil 37 gelagert und wird unter der Kraft einer zwischen sich und dem Abtriebsteil 37 gespannten Zugfeder 44 gegen einen auf dem Abtriebsteil 37 gelegenen Anschlag 45 vorgespannt und greift in dieser Sperrposition 46 in eine Mitnahmenut 47 des Antriebsteiles 39 ein. Die Höhe der Vorspannkraft und die Hebelarmverhältnisse bestimmen das übertragbare Moment. Wird dieses bei Überlastung überschritten, verschwenkt der Schwenkhebel 42 durch Verdrehung im Uhrzeigersinn in seine in Strichpunktlinie dargestellte Position 48, wodurch sich das Antriebsteil 39 frei um maximal 360° weiterdreht, während das Abtriebsteil 37 und der Rechenförderer 23 stehenbleiben und erst dann wieder mitgenommen werden, wenn die Mitnahmenut 47 gegen den Schwenkhebel 42 stößt, der nach dem Ausklinken jeweils durch die Feder 44 in seine ursprüngliche Sperrposition 46 zurückschwenkt. (Überlastfunktion)

Bei sehr geringer Gutszufuhr, z. B. durch dünne Schwaden, wird der Schwenkhebel 42 über eine ortsfest aber schwenkbar gelagerte Schaltklinke 49 drehmomentunabhängig in seine zweite Position 48 geschwenkt, so daß An- 39 und Abtriebsteil 37 voneinander getrennt sind. Dieses erfolgt so rechtzeitig, daß der Rechenförderer 23 durch eine gleichzeitig angesteuerte Schnellstop-Bremse 50, die nur sinnbildlich dargestellt ist, in seiner in Figur 2 gezeigten, außerhalb des Zuführkanales 19 befindlichen Stellung 31, zum Stillstand kommt und dort solange anhält, bis genügend Erntegut im Zuführkanal 19 angesammelt ist, um eine ausreichende Befüllung des Preßkanales 1 beim Wiedereinschalten des Rechenförderers 23 zu erreichen. Ein Hydrozylinder 51 drückt die Schaltklinke 49 in ihrer in Strichlinie gezeichneten Position 52 a in die Umlaufbahn des Schwenkhebels 42, so daß dieser jeweils nach max. 360° zwangsläufig in die Position 48 geschwenkt wird, in der keine Mitnahme des Abtriebsteiles 37 durch das Antriebsteil 39 erfolgt. Erst wenn die Schaltklinke 49 in ihre Ausgangsposition 52 durch eine Feder 53 gegen einen Anschlag 54 zurückschwenkt, nimmt das Antriebsteil 39 den Schwenkhebel 42 und damit das Abtriebsteil 37 mit dem Rechenförderer 23 exakt synchron zum Preßkolben 13 mit, wodurch auch bei dünnsten Schwaden eine optimale Befüllung des Preßkanales 1 gewährleistet ist. Die Steuerung der Schaltvorrichtung 36 kann auf einfachste Weise durch ein Steuergerät 55 erfolgen, das z. B. bei dünnen Schwaden so eingestellt wird, daß drei Preßkolbenhübe zwischen zwei Förderperioden des Rechenförderers 23 erfolgen. Da die Preßkolbenbelastung direkt abhängig von der Packungsdicke ist, die in den Preßkanal 1 geschoben wird, kann die Steuerung des zweiten Rechenförderers 23 auch direkt abhängig von der Preßkolbenbelastung oder auch abhängig von der Belastung des ersten Rechenförderers 22 erfolgen. In Figur 2 und Figur 3 ist eine derartige Einrichtung 56 zum Steuern und Regeln des Rechenförderers 23 mittels der Schaltvorrichtung 36 in stark vereinfachter Form dargestellt.

Der gesamte Steuerkreis ist am besten aus Figur 2 ersichtlich. Sowohl dem Rechenförderer 23 als auch dem Preßkolben 13 ist jeweils ein Positionssensor 57,58 zugeordnet, dessen Ausgangssignale dem elektronischen Steuergerät 55 über je eine elektrische Leitung zugeführt werden. Diese Positionssensoren 57,58 dienen auch zum Messen der Anzahl der Umdrehungen des Rechenförderers 23, bzw. der Anzahl der Preßkolbenhübe. Im Zuführkanal 19 ist ein Sensor 59 für die Materialfüllhöhe im Zuführkanal 19 oder für die Vorpressung des Materials im Zuführkanal 19 angeordnet, dessen Signale ebenfalls dem Steuergerät 55 zugeführt werden. Ein weiterer Positionssensor 60 für die Stellung der Schaltklinke 49 steht ebenfalls mit dem Steuergerät 55 in Verbindung. Zu der Steuereinrichtung 56 der Schaltvorrichtung 36 gehört ferner ein elektrohydraulisches Regelventil 61, das vom elektronischen Steuergerät 55 ansteuerbar ist, von einer Pumpe 62 mit Druckmittel versorgt wird und den ersten Hydrozylinder 51 steuert, der mit der Schaltklinke 49 in Wirkverbindung steht und einen zweiten Hydrozylinder 63 steuert, der die Schnellstop-Bremse 50 für den Rechenförderer 23 betätigt. Über einen Eingang 64 am Steuergerät 55 sind Sollwerte vorgebbar für die Anzahl der Preßkolbenhübe pro Rechenfördererumdrehung. Wird z. B. der Sollwert 1 vorgegeben, so erfolgt bei jedem Preßkolbenhub automatisch eine Rechenfördererumdrehung. Bei Eingabe des Sollwertes 3 erfolgt auf 3 Preßkolbenhübe nur eine Rechenfördererumdrehung. Bei der vollautomatischen Steuerung der Schaltvorrichtung 36 wird die Anzahl der Preßkolbenhübe pro Rechenfördererumdrehung z. B. von dem Füllhöhensensor 59 und /oder der durch Kraftsensor 65 an der Pleuelstange 14 ermittelten Preßkolbenbelastung abgeleitet. Sinkt z. B. die Preßkolbenbelastung unter einen vorgegebenen Sollwert ab, so bildet das elektronische Steuergerät 55 ein Differenzsignal, welches das elektrohydraulische Regelventil 61 so steuert, daß der eine Hydrozylinder 51 die Schaltklinke 49 in Position 52a bewegt und gleichzeitig der andere Hydrozylinder 63 die Schnellstop-Bremse 50 betätigt, so daß der Rechenförderer 23 mit Hilfe des Positionssensors 58 exakt in der Stellung 31 angehalten wird. Erst wenn der Füllhöhensensor 59 den Sollwert erreicht, wird das Regelventil 61 so angesteuert, daß die Bremse 50 gelöst und die Schaltklinke 49 in Stellung 52 geschwenkt wird, so daß der Rechenförderer 23 durch Einrasten des Schwenkhebels 42 exakt synchron zum Preßkolben 13 einen Befüllhub des Preßkanals 1 durchführt. Um Überlastungen des Rechenförderers 23 beim Wiedereinschalten zu vermeiden, wird zweckmäßigerweise z. B. das Antriebsmoment des Rechenförderers 23 mittels eines Sensors 66 gemessen und unter Einbeziehung der durch den Sensor 66 ermittelten aktuellen Preßkolbenstellung, der Befüllzyklus so rechtzeitig eingeleitet, daß es nicht zum Ansprechen der Überlastsicherung des Rechenförderers 23 kommt. Die Überlastsicherung 33 dient damit in erster Linie zum Vermeiden von Überlastungen im 1 : 1 Bereich also bei großen Durchsatzleistungen.

Bei dem in Figur 4 dargestellten Ausführungsbeispiel ist eine an sich bekannte Keilschaltkupplung als Eintouren-Überlastkupplung und Schaltvorrichtung 67 ausgestaltet. Die Schaltvorrichtung 67 besitzt ein im Betrieb um die Antriebswellendrehachse 27 des Rechenförderers 23 ständig rotierendes Antriebsteil 68, das durch einen nur angedeuteten Kettentrieb 69 in Pfeilrichtung 70 angetrieben wird. Koaxial zur Drehachse 27 ist ein Abtriebsteil 71 über eine Kerbverzahnung drehfest mit der Rechenfördererantriebswelle 38 verbunden. In dem Abtriebsteil 71 ist ein einziges Sperrelement 72 angeordnet, welches durch ein Zwischenstück 73 und eine Feder 74 in eine im Antriebsteil 68 angeordnete, rechteckförmige Aussparung 75 greift und durch diesen Eingriff An- 68 und Abtriebsteil 71 miteinander verbindet. Zum Ausrücken des Sperrelementes 72 dient in diesem Fall ein Schwenkhebel 76 mit Exzenternocken 77. Der Exzenternocken 77 des Schwenkhebels 76 durchgreift im Bereich des Sperrelements 72 eine Ausnehmung 78 im Antriebsteil 68. Der Schwenkhebel 76 ist in am Antriebsteil 68 angeschweißten Laschen 79 mittels eines Lagerbolzens 80 schwenkbar gelagert und liegt unter dem Zug einer Feder 81 an einem auf dem Antriebsteil 68 befestigten Anschlag 82 an. Im Falle der Sperrfunktion nimmt der Schwenkhebel 76 die in Fig. 4 in Vollinien dargestellte Stellung 83 ein und im Falle der Freilauffunktion des Antriebsteiles 68 seine in Strichpunktlinie dargestellte Stellung 85, in der das Sperrelement 72 außer Eingriff mit der Nut 75 gehalten wird. Ansonsten arbeitet die Schaltvorrichtung 67 funktionsgleich zu der in Fig. 3 dargestellten Ausführungsform.

## Patentansprüche

1. Ballenpresse für landwirtschaftliche Erntegüter zur Erzeugung rechteckiger Ballen mit einem kontinuierlich angetriebenen Rechenförderer (23), der das Erntegut synchron zu der periodischen Hin- und Herbewegung eines Preßkolbens (13) durch eine Preßkanaleinlaßöffnung (21) fördert, die der Preßkolben (13) periodisch öffnet oder verschließt, wobei der Rechenförderer (23) eine Überlastaussetzkupplung (33) aufweist, welche den Rechenförderer (23) bei Überlastung für die Zeit einer Förderperiode von seinem Antrieb trennt und nach Ablauf dieser Periode die Antriebsverbindung zum Rechenförderer (23) selbsttätig wieder herstellt, **dadurch gekennzeichnet, daß** eine Schaltvorrichtung (36, 67) zum periodischen Abschalten des Rechenförderers (23) und Mittel (50) vorgesehen sind zum Anhalten des Rechenförderers (23) für eine oder mehrere Förderperioden in einer förderunwirksamen Stellung (31) außerhalb des Zuführkanales (19), und daß der Einschaltvorgang nur synchron zur Bewegung des Preßkolbens (13) erfolgt.

2. Ballenpresse nach Anspruch 1, **dadurch gekennzeichnet, daß** das Verhältnis Anzahl der Preßkolbenhübe pro Rechenfördererumdrehung als Parameter für die Steuerung der Schaltvorrichtung (36, 67) dient, und daß die Abschaltdauer des Rechenförderers (23) an einem Steuer- bzw. Bediengerät (55) als Sollwert voreinstellbar bzw. programmierbar ist, welches mit je einem Sensor (57, 58) für die Preßkolbenhubzahl und die Rechenfördererumdrehungen in Wirkverbindung steht und mittels eines Stellgliedes (49, 84) die Schaltvorrichtung (36, 67) betätigt.

3. Ballenpresse nach Anspruch 1 oder 2, **dadurch gekennzeichnet, daß** das Steuer- bzw. Bediengerät (55) mit einem Sensor (59) für die Vorpressung oder Materialfüllhöhe im Zuführkanal, einem Sensor für die aufgenommene Schwadenmasse, einem Sensor für die Dicke der Preßpackung im Preßkanal, einem Sensor für die Geschwindigkeit der Ballenpresse, einem Sensor (65) für die Preßkolbenbelastung oder einem Sensor (66) für die Belastung anderer dem Preßkolben (13) vorgeschalteter Förder-, Vorpreß- oder Schneidelemente in Wirkverbindung steht, und daß die Steuerung der Schaltvorrichtung (36, 67) in Abhängigkeit von einem oder mehreren dieser Sensoren erfolgt.

4. Ballenpresse nach einem der vorhergehenden Ansprüche, **dadurch gekennzeichnet, daß** eine Eintouren-Kugel-, -Nocken-, -Keilschalt- (67) oder sonstige -Überlastkupplung als Schaltvorrichtung ausgebildet ist, mit der der Rechenförderer (23) für die Zeit einer oder mehrerer Preßkolbenhubperioden von seinem Antrieb trennbar ist.

5. Ballenpresse nach einem oder mehreren der vorhergehenden Ansprüche, **dadurch gekennzeichnet, daß** die Schaltvorrichtung (36, 67) ein im Betrieb um eine Drehachse (27) rotierendes Antriebsteil (39, 68) und ein koaxial zu der Drehachse (27) angeordnetes, drehfest mit einer Rechenfördererantriebswelle (38) verbundenes Abtriebsteil (37, 71) aufweist und am Antriebsteil (68) oder am Abtriebsteil (37) ein gegen die Kraft eines Kraftspeichers (44, 74) ausweichbares Sperrelement (42, 72) aufweist, welches verschieb-, verschwenk- oder verdrehbar in ein Mitnahmeelement (47, 75) im Antriebsteil (39) oder im Abtriebsteil (71) eingreift und so das Antriebsteil (39, 68) kraftschlüssig mit dem Abtriebsteil (37, 71) verbindet, wobei mechanische, elektrische, elektromechanische oder elektrohydraulische Mittel (44, 49, 51, 53, 84) zum zwangsläufigen Aus- und Einrücken des Sperrelementes (42, 72) vorgesehen sind, um das Antriebsteil (39, 68) mit dem Abtriebsteil (37, 71) zum definierten Zeitpunkt zu entkoppeln und wieder zu koppeln.

6. Ballenpresse nach Anspruch 5, **dadurch gekennzeichnet, daß** die Schaltvorrichtung (36, 67) einen ständig mit dem Antriebsteil (68) oder dem Abtriebsteil (37) umlaufenden Schwenkhebel (42, 76) aufweist, welcher durch eine in dessen Umlaufbahn einschwenkbare Schaltklinke (49, 84) An- (39, 68) und Abtriebsteile (37, 71) voneinander trennt.

7. Ballenpresse nach einem oder mehreren der vorhergehenden Ansprüche, **dadurch gekennzeichnet, daß** dem Antriebsstrang des Rechenförderers (23) nach der Schaltvorrichtung (36, 67) bzw. der Überlastaussetzkupplung oder direkt dem Rechenförderer (23) eine Schnellstop-Einrichtung (50) zugeordnet ist, mittels welcher der Rechenförderer (23) in der förderunwirksamen Stellung (31) anhaltbar ist.

8. Ballenpresse nach einem oder mehreren der vorhergehenden Ansprüche, **dadurch gekennzeichnet, daß** die Betätigung der Schnellstop-Einrichtung (50) mit der Betätigung der Schaltvorrichtung (36, 67) gekoppelt ist.

9. Ballenpresse nach einem oder mehreren der vorhergehenden Ansprüche, **dadurch gekennzeichnet, daß** als Rechenförderer (23) nebeneinander auf einer gemeinsamen Drehachse (27) befestigte, rotierende Segmentkörper (28) als Mitnehmer vorgesehen sind, die den Preßkolben (13) durchfahren.

10. Ballenpresse nach einem oder mehreren der vorhergehenden Ansprüche 1 bis 8, **dadurch gekennzeichnet, daß** die Förderrechen des Rechenförderers (23) gesteuerte Bewegungen ausführen.

## Claims

1. A baler for producing square bales from agricultural harvested crops, having a continuously driven rake conveyor (23), which conveys the harvested crop synchronously with the periodic to-and-fro movement of a plunger (13) through a baling channel inlet opening (21), which the plunger (13) periodically opens or closes, wherein the rake conveyor (23) comprises an overload interrupt clutch (33), which separates the rake conveyor (23) from its drive for the duration of a conveying period in the event of overload and automatically reestablishes the drive connection to the rake conveyor (23) at the end of this period, **characterised in that** a switching device (36, 67) for periodically switching off the rake conveyor (23) is provided, together with means (50) for stopping the rake conveyor (23) for one or more conveying periods in a non-conveying position (31) outside the supply channel (19), and **in that** the switching-on operation is performed only synchronously with movement of the plunger (13).

2. A baler according to claim 1, **characterised in that** the ratio of the number of plunger strokes per rake conveyor revolution serves as a parameter for controlling the switching device (36, 67), and **in that** the switched-off period of the rake conveyor (23) may be preset or programmed as a desired value at a control and/or operating device (55), which is in each case in active connection with a sensor (57, 58) for the plunger stroke number and the rake conveyor revolutions and actuates the switching device (36, 67) by means of an actuator (49, 34).

3. A baler according to claim 1 or claim 2, **characterised in that** the control and/or operating device (55) is in active connection with a sensor (59) for precompression or the degree of filling in the supply channel, a sensor for the picked-up swath mass, a sensor for the thickness of the baling material in the baling channel, a sensor for the speed of the baler, a sensor (65) for plunger loading or a sensor (66) for the loading of other conveying, precompression or cutting elements connected upstream of the plunger (13), and **in that** control of the switching device (36, 67) proceeds as a function of one or more of these sensors.

4. A baler according to one of the preceding claims, **characterised in that** a single-revolution ball, cam, wedge switching (67) or other overload clutch takes the form of a switching device, by means of which the rake conveyor (23) may be separated from its drive for the duration of one or more plunger stroke periods.

5. A baler according to one or more of the preceding claims, **characterised in that** the switching device (36, 67) comprises a drive component (39, 68) rotating during operation about a pivot pin (27) and a driven component (37, 71) arranged coaxially with the pivot pin (27) and connected non-rotatably with a rake conveyor drive shaft (38), and comprises on the drive component (68) or on the driven component (37) a blocking element (42, 72) deflectable against the force of an energy storing device (44, 74), which blocking element (42, 72) engages displaceably, swivellably or rotatably in a driving element (47, 75) in the drive component (39) or in the driven component (71) and thus connects the drive component (39, 68) non-interlockingly with the driven component (37, 71), wherein mechanical, electrical, electro-mechanical or electro-hydraulic means (44, 49, 51, 53, 84) are provided for forcible disengagement and engagement of the blocking element (42, 72), in order to uncouple the drive component (39, 68) from the driven component (37, 71) at defined point in time and to recouple them.

6. A baler according to claim 5, **characterised in that** the switching device (36, 67) comprises a pivoted lever (42, 76) revolving constantly with the drive component (68) or the driven component (37), which pivoted lever (42, 76) separates drive (39, 68) and driven components (37, 71) by means of a catch (49, 84) swivellable into its path of revolution.

7. A baler according to one or more of the preceding claims, **characterised in that** a quick stop means (50) is associated with the drive train of the rake conveyor (23) downstream of the switching device (36, 67) and/or the overload interrupt clutch or directly with the rake conveyor (23), by means of which quick stop means (50) the rake conveyor (23) may be stopped in the non-conveying position (31).

8. A baler according to one or more of the preceding claims, **characterised in that** actuation of the quick stop means (50) is coupled with actuation of the switching means (36, 67).

9. A baler according to one or more of the preceding claims, **characterised in that** rotating segmental bodies (28) attached next to one another as rake conveyors (23) on a common pivot pin (27) are provided as drivers, which drive the plunger (13) through.

10. A baler according to one or more of preceding claims 1 to 8, **characterised in that** the conveying rakes of the rake conveyor (23) perform controlled movements.

## Revendications

1. Presse à balles pour récoltes agricoles, destinée à former des balles rectangulaires, comprenant une fourche d'amenage (23) actionnée en continu qui, de manière synchrone avec le mouvement de va-et-vient cyclique d'un piston de compression (13), entraîne la récolte à travers un orifice d'admission du canal de compression (21), ouvert et fermé cycliquement par le piston de compression (13), la fourche d'amenage (23) étant munie d'un embrayage anti-surcharge (33), par lequel la fourche d'amenage (23), en cas de surcharge, est découplée de son système d'entraînement pendant la période d'un cycle d'amenage et, à la fin de ce cycle, la liaison entre le système d'entraînement et la fourche d'amenage (23) est rétablie automatiquement, **caractérisée en ce qu'**il est prévu un dispositif de couplage (36, 67) pour le débrayage cyclique de la fourche d'amenage (23) et des moyens (50) pour immobiliser la fourche d'amenage (23) pendant un ou plusieurs cycles d'amenage dans une position (31) inactive en dehors du canal d'admission (19), et **en ce que** le processus d'embrayage est effectué de manière synchrone avec le déplacement du piston de compression (13).

2. Presse à balles selon la revendication 1, **caractérisée en ce que** le rapport du nombre de courses du piston de compression par rotation de la fourche d'amenage est utilisé comme paramètre de commande du dispositif de couplage (36, 67), et **en ce que** la durée de débrayage de la fourche d'amenage (23) peut être prédéfinie ou programmée sous forme de valeur de consigne dans un composant de commande (55), qui est en liaison active avec un capteur (57, 58) respectivement pour le nombre de courses du piston de compression et pour le nombre de rotations de la fourche d'amenage et qui active le dispositif de couplage (36, 67) au moyen d'un organe de commande (49, 84).

3. Presse à balles selon la revendication 1 ou 2,
**caractérisée en ce que** le composant de commande (55) est en liaison active avec un capteur (59) pour le pré-compactage ou la hauteur de remplissage dans le canal d'admission, un capteur pour la masse d'andain ramassée, un capteur pour la taille du ballot à compacter dans le canal de compression, un capteur pour la vitesse de la presse à balles, un capteur (65) pour la charge du piston de compression ou un capteur (66) pour la charge d'autres éléments d'amenage, de pré-compactage ou de coupe montés en amont du piston de compression (13), et **en ce que** le dispositif de couplage (36, 67) est commandé en fonction d'un ou de plusieurs de ces capteurs.

4. Presse à balles selon une des revendications précédentes, **caractérisée en ce qu'**un embrayage à une seule vitesse à billes, à cames, à clavettes (67) ou autre embrayage anti-surcharge est conçu sous la forme d'un dispositif de couplage, par lequel la fourche d'amenage (23) peut être découplée de son système d'entraînement pendant une durée correspondant à un ou plusieurs cycles de courses du piston de compression.

5. Presse à balles selon une des revendications précédentes, **caractérisée en ce que** le dispositif de couplage (36, 67) est formé par une pièce motrice (39, 68) tournant en service autour d'un axe de rotation (27), et d'une pièce entraînée (37, 71) disposée coaxialement par rapport à l'axe de rotation (27) et assemblée avec l'arbre d'entraînement (38) de la fourche d'amenage de manière à être entraînée en rotation avec celui-ci, et par un élément de blocage (42, 72) sur la pièce motrice (68) ou la pièce entraînée (37), qui peut se déplacer à l'encontre de la force d'un accumulateur de force (44, 74) et qui engrène par coulissement, pivotement ou rotation dans un élément d'entraînement (47, 75) dans la pièce motrice (39) ou dans la pièce entraînée (71) et relie ainsi, par conjugaison de force, la pièce motrice (39, 68) à la pièce entraînée (37, 71), des moyens (44, 49, 51, 53, 84) mécaniques, électriques, électromécaniques ou électrohydrauliques étant prévus pour embrayer et débrayer obligatoirement l'élément de blocage (42, 72), afin de découpler et de coupler de nouveau à un moment défini la pièce motrice (39, 68) à la pièce entraînée (37, 71).

6. Presse à balles selon la revendication 5, **caractérisée en ce que** le dispositif de couplage (36, 67) comporte un levier pivotant (42, 76) tournant en permanence avec la pièce motrice (68) ou la pièce entraînée (37), lequel peut découpler la pièce motrice (39, 68) et la pièce entraînée (37, 71) au moyen d'une lame de couplage (49, 84) pouvant pivoter dans la trajectoire dudit levier pivotant.

7. Presse à balles selon une ou plusieurs des revendications précédentes, **caractérisée en ce qu'**un dispositif à arrêt instantané (50) est associé à la ligne d'entraînement de la fourche d'amenage (23) en aval du dispositif de couplage (36, 67) ou de l'embrayage anti-surcharge ou est associé directement à la fourche d'amenage (23), lequel peut immobiliser la fourche d'amenage (23) dans la position (31) inactive.

8. Presse à balles selon une ou plusieurs des revendications précédentes, **caractérisée en ce que** la manoeuvre du dispositif à arrêt instantané (50) est couplée à la manoeuvre du dispositif de couplage (36, 67).

9. Presse à balles selon une ou plusieurs des revendications précédentes, **caractérisé en ce que** la fourche d'amenage (23) est formée par des segments (28) rotatifs fixés les uns à côté des autres sur un axe de rotation (27) commun et formant des poussoirs, qui passent à travers le piston de compression (13).

10. Presse à balles selon une ou plusieurs des revendications 1 à 8, **caractérisée en ce que** les fourches du fourche d'amenage (23) effectuent des mouvements commandés.
